# EUROPEAN PATENT SPECIFICATION

(11) **EP 4 095 547 B1**
(45) Date of publication and mention of the grant of the patent: **12.02.2025**
(21) Application number: 22173733.1
(22) Date of filing: 17.05.2022
(51) Int. Cl.: G01S 7/40, G01S 13/04, G01S 13/56, G01S 13/89

(54) **DEFINING A PROTECTED REGION FOR A RADAR DETECTOR**
DEFINITION EINES GESCHÜTZTEN BEREICHS FÜR EINEN RADARDETEKTOR
DÉFINITION D'UNE RÉGION PROTÉGÉE POUR UN DÉTECTEUR RADAR

(30) Priority: 24.05.2021 US 202163192272 P
(43) Date of publication of application: 30.11.2022
(73) Proprietor: Carrier Corporation, Palm Beach Gardens, FL 33418 (US)
(72) Inventor: MAZUR, Mateusz, Sopot (PL); RAMOUTAR, Michael, Westford (US); WOLSKI, Leszek, Reda (PL); XIONG, Ziyou, Wethersfield (US)
(74) Representative: Dehns

(56) References cited:
- US-A1- 2016 100 522
- US-A1- 2020 064 784

## Description

### BACKGROUND

The present invention relates generally to radar detection and in particular addresses a radar detection system for a security system which can be calibrated in various ways.

Conventional radar detection systems for area security rely on virtual fences or other borders to define a designated protected region. However, this approach may lack accuracy in the case of irregularly shaped regions, structures within the protected region such as walls, or other obstacles within the protected region. Additionally, this approach may not be easily tailored by a user to a particular protected region.

US 2020/0064784 A1 relates to an occupant detection device comprising an occupant detection circuit and a control circuit and being for determining the location of an occupant in a space and adjusting an occupant count for a region of interest.

### SUMMARY

According to one aspect, a method of calibrating a radar detection system includes selecting location indicators. A radar signal is emitted with a transmitter of a sensor to a location of each of the plurality of the location indicators. The radar signal is reflected off of a target at the location of each of the plurality of location indicators. The radar signal which has been reflected off of the target at the location of each of the plurality of location indicators is received with a receiver of the sensor. The location of the target at each of the plurality of location indicators is communicated between the sensor and a controller. At least one plurality of locations is selected with the controller. The at least one plurality of locations selected with the controller defines a protected region. The protected region is designated with the controller. This method calibrates the radar detection system such that the radar detection system is capable of detecting an object in the protected region.

Each of the plurality of location indicators may have at least one location range and each location range may define a protected subregion such that the protected region is defined by the plurality of protected subregions.

The plurality of location indicators may comprise a vector of points and the at least one location range of each of the vector of points may be a plurality of radii about the point.

Selecting, with the controller, at least one plurality of locations may comprise calculating, with the controller, a plurality of radii associated with each of the vector of points.

The plurality of location indicators may comprise a vector of angles and the at least one location range of each of the vector of angles may be a radius range.

The method may further comprise calculating, with the controller, a radius range associated with each of the vector of angles.

Each of the plurality of location indicators may have an x-coordinate and a y-coordinate, and the x-coordinate and the y-coordinate of each of the plurality of location indicators may define each of the protected subregions.

Selecting the plurality of location indicators comprises moving the target to each of the plurality of location indicators. Selecting the plurality of location indicators comprises performing at least one calibration signal associated with each of the plurality of location indicators. The at least one calibration signal is selected from the group consisting of: a stop in movement, a movement, and an acoustic emission. The target performs the calibration signal and is a user.

A method of detecting an object in a protected region with a calibrated radar detection system includes emitting, with a transmitter of a sensor, a radar signal to a location of each of a plurality of location indicators. A receiver of the sensor detects if the radar signal has been reflected off of a target at the location of at least one of each of the plurality of location indicators. The sensor communicates to a controller if the radar signal has been reflected off of a target at the location of the at least one of each of the plurality of location indicators. The controller determines that an object is present within the protected region based upon detection of the radar signal being reflected off of the target. The protected region is defined by a plurality of protected subregions, and each of the plurality of protected subregions is defined by a location of each of the plurality of location indicators.

The method may further comprise triggering, with the controller, an alarm if the controller determines an object is present within the protected region.

The location of each of the plurality of location indicators may be defined by at least one plurality of radii.

According to another aspect, a radar detector for a security system includes a sensor and a controller. The sensor includes a transmitter, a receiver, and a converter. The transmitter is configured to emit a radar signal to a plurality of location indicators. The receiver is configured to receive a reflection of the radar signal from the transmitter that is reflected off of a target. The controller is configured to communicate with the sensor to record a location of each of the plurality of location indicators. The controller is further configured to select at least one plurality of locations, designate a protected region which is defined by the at least one plurality of locations and thereby calibrate the radar detector, and determine if an object is present in the protected region. The controller is configured to select the plurality of location indicators by detecting a target moving to each of the plurality of location indicators. The target is a user that performs at least one calibration signal associated with each of the plurality of location indicators. The at least one calibration signal is selected from the group consisting of: a stop in movement, a movement, and an acoustic emission.

The protected region may be defined by a plurality of protected subregions and each of the plurality of protected subregions may be defined by each of the locations of the location indicators.

The controller may comprise a memory unit, at least one processor and at least one communication device.

The controller may be further configured to trigger an alarm if an object is detected in the protected region.

The sensor may be further configured to detect at least one calibration signal, and the controller may be configured to communicate with the sensor to record a calibration location for each of the at least one calibration signals.

The controller may be further configured to record at least one plurality of location ranges associated with the calibration location of each of the at least one calibration signals, and each of the protected subregions may be defined by each of the at least one plurality of location ranges.

### BRIEF DESCRIPTION OF THE DRAWINGS

The subject matter, which is regarded as the disclosure, is particularly pointed out and distinctly claimed in the claims at the conclusion of the specification. The following descriptions of the drawings should not be considered limiting in any way.

Certain exemplary embodiments will now be described in greater detail by way of example only and with reference to the accompanying drawings in which:
FIG. 1 is a schematic depiction of a radar detection system.
FIG. 2 is a plan view of a radar detection system which is calibrated to use a vector of points and a corresponding vector of radii to define a protected region.
FIG. 3 is a plan view of a radar detection system which is calibrated to use a vector of angles and a corresponding vector of radius ranges to define a protected region.
FIG. 4 is a plan view of a radar detection system which is calibrated to use a vector of x-coordinates and y-coordinates to define a protected region.
FIG. 5 illustrates a method of calibrating a radar detection system.

### DETAILED DESCRIPTION

A protected region is made up of protected subregions. Each protected subregion is defined by location indicators, such as points each surrounded by a plurality of radii or angles each having a selected radius range. A radar detection system can be calibrated by gestures performed at the location of the location indicators, or by selecting the location indicators with a controller. The radar detection system is used to monitor the defined protected subregions and detect objects inside the protected region.

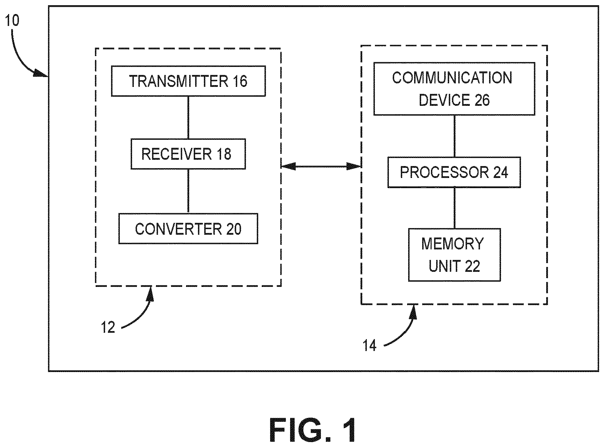

FIG. 1 is a schematic depiction of exemplary radar detection system 10. As shown, radar detection system 10 may include sensor 12 and controller 14. Sensor 12 may include transmitter 16, receiver 18, and converter 20. In some embodiments, sensor 12 can include multiple transmitters 16 and/or receivers 18. Controller 14 may include memory unit 22, processor 24, and communication device 26.

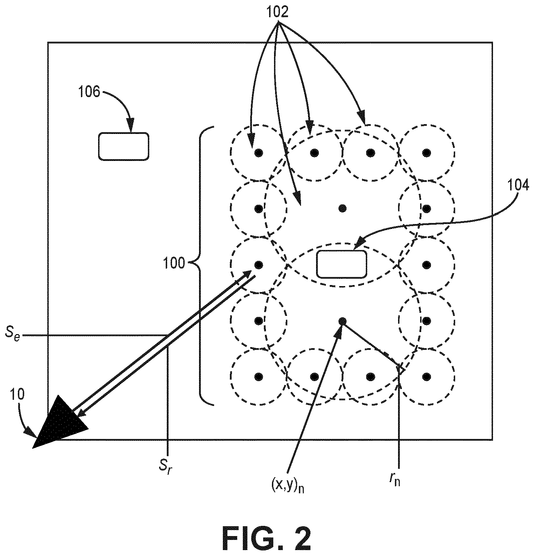

Transmitter 16 is configured to emit a radar signal, such as emitted radar signal *Sₑ* (shown in FIGS. 2-4), which can be reflected off of a target to create a reflected radar signal *Sᵣ* (shown in FIGS. 2-4). Receiver 18 is configured to receive a reflected radar signal, such as reflected radar signal *Sᵣ,* when the reflected radar signal returns to the sensor 12. In this manner, receiver 18 can detect a reflected radar signal *Sᵣ* from a target. Transmitter 16 and receiver 18 can be connected to one or more antennae (not shown), and can in some examples be integrated into one chip. The emitted radar signal *Sₑ* can be pulsed, and transmitter 16 can be configured to emit a radar signal *Sₑ* at suitable frequencies in microwave (1 GHz to 30 GHz) or millimeter wave (greater than 30 GHz) bands. For example, the transmitter 16 can be configured to emit emitted radar signal *Sₑ* at 2.4 GHz, 5-6 GHz, 10 GHz, 24 GHz, or 64 GHz. Transmitter 16 can additionally and/or optionally be configured to use a wide spectrum of frequencies, such 2-10 GHz. Converter 20 is an analog/digital converter, and is configured to convert the received reflected radar signal *Sᵣ*, including positional data about the reflected radar signal *Sᵣ,* into a digital signal which can be communicated to controller 14. Sensor 12 can additionally include other hardware, software, or firmware components.

As described above, controller 14 may include memory unit 22, processor 24, and communication device 26. In some embodiments, controller 14 can include multiple processors 24 and/or communication devices 26. Controller 14 can additionally include more components, such as an input device, output device, alarm, and/or power source. An input device can include a mouse, a keyboard, a microphone, a camera device, a presence-sensitive and/or touch-sensitive display, or other type of device configured to receive input from a user. An output device can include a display device, a sound card, a video graphics card, a speaker, a cathode ray tube (CRT) monitor, a liquid crystal display (LCD), a light emitting diode (LED) display, an organic light emitting diode (OLED) display, or other type of device for outputting information in a form understandable to users or machines. In examples where controller 14 is configured to transfer and store data via the cloud, the input device and/or output device can be a host computing system off-site and can use applications to, for example, define protected regions or receive information about detected objects.

Processor 24 may be configured to implement functionality and/or process instructions for execution within controller 14. For instance, processor 24 can be capable of processing instructions stored in memory unit 22. Examples of processor 24 can include any one or more of a microprocessor, a controller, a digital signal processor (DSP), an application specific integrated circuit (ASIC), a field-programmable gate array (FPGA), or other equivalent discrete or integrated logic circuitry.

Memory unit 22 can be configured to store information within controller 14 during operation. Memory unit 22, in some examples, is described as a computer-readable storage medium. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, memory unit 22 is a temporary memory, meaning that a primary purpose of memory unit 22 is not long-term storage. Memory unit 22, in some examples, is described as volatile memory, meaning that memory unit 22 does not maintain stored contents when power to controller 14 is turned off. Examples of volatile memories can include random access memories (RAM), dynamic random access memories (DRAM), static random access memories (SRAM), and other forms of volatile memories. In some examples, memory unit 22 is used to store program instructions for execution by processor 24.

Memory unit 22 can be configured to store larger amounts of information than volatile memory. Memory unit 22 can further be configured for long-term storage of information. In some examples, memory unit 22 includes non-volatile storage elements. Examples of such non-volatile storage elements can include magnetic hard discs, optical discs, flash memories, or forms of electrically programmable memories (EPROM) or electrically erasable and programmable (EEPROM) memories.

Controller 14 may also include communication device 26. Controller 14 can utilize communication device 26 to communicate with external devices via one or more networks, such as one or more wireless or wired networks or both. Communication device 26 can be a network interface card, such as an Ethernet card, an optical transceiver, a radio frequency transceiver, or any other type of device that can send and receive information. For example, communication device 26 can be a radio frequency transmitter dedicated to Bluetooth or WiFi bands or commercial networks such as GSM, UMTS, 3G, 4G, 5G, and others. Alternately, communication device 26 can be a Universal Serial Bus (USB).

Radar detection system 10 can be, for example, configured to detect targets over any area consistent with the range of the transmitter 16 and sensitivity of the receiver 18. For example, the radar detection system 10 can detect targets at a distance of up to 16 meters from the radar detection system 10, and in some embodiments can be configured to detect targets at a distance of up to 20 meters from the radar detection system 10. It will be appreciated that distances greater than 20 meters may be possible in certain instances. In some embodiments, radar detection system 10 can be configured to detect targets over an angular range of 90 degrees. For a radar detection system 10 with a 90 degree field of view, the radar detection system 10 can detect targets over an area equal to one-quarter the area of a circle with a radius equal to the maximum distance at which the radar detection system 10 can detect targets. It will be appreciated that angular ranges greater than or less than 90 degrees may be possible in certain instances. In an embodiment where the radar detection system 10 is configured to detect targets at a distance of up to 16 meters and over an angular range of 90 degrees, the radar detection system 10 can detect targets over an area of approximately 200 square meters. In an embodiment where the radar detection system 10 is configured to detect targets at a distance of up to 20 meters and over an angular range of 90 degrees, the radar detection system 10 can detect targets over an area of approximately 490 square meters.

Radar detection system 10 may be configured to allow a user to select a set of location indicators in order to designate a set of protected subregions. This set of protected subregions defines a protected region. The protected subregions can be discrete areas, and each protected subregion can overlap with other protected subregions as needed to most accurately define the protected region. As described in detail below, the set of location indicators can be, for example, a vector of points with corresponding radius ranges, a vector of angles with corresponding angle ranges, or a vector of points with corresponding x- and y-coordinates.

Processor 24 can be configured to control transmitter 16 and receiver 18. Processor 24 can process positional data of each emitted and reflected radar signal. Memory unit 22 can store positional data of the radar signals and thereby store positional data of the location indicators. Communication device 26 can communicate and network with sensor 12 to communicate positional data of the emitted radar signal *Sₑ* and reflected radar signal *Sᵣ.* Sensor 12 may be configured to communicate with controller 14 via communication device 26. In some embodiments, some or all parts of controller 14 can be included within sensor 12.

FIG. 2 is a plan view of exemplary radar detection system 10 which is calibrated to use point vector [(x,y)₁...(x,y)_{N}] and corresponding vector of radii [*r₁...r_{N}*] to define protected region 100. It should be understood that (x,y)ₙ denotes any of the points in point vector [(x,y)₁...(x,y)_{N}], and *rₙ* denotes any of the radii in vector of radii [*r₁...r_{N}*]. Each point (x,y)ₙ can have a corresponding location range, such as radii *rₙ*, such that point vector [(x,y)₁...(x,y)_{N}] has a corresponding vector of radii [*r₁...r_{N}*]*.* Radii *rₙ* about each point (x,y)ₙ can form circular areas about points (x,y)ₙ with a radius of *rₙ.* Each set of radii *rₙ* defines a protected subregion 102.

Radar detection system 10 may be configured to allow a user to select location indicators which make up a vector of points, such as point vector [(x,y)₁...(x,y)_{N}]. Protected region 100 may be defined by the set of protected subregions 102, such that protected region 100 is made up of a set of circular areas. The radii *rₙ* of each point (x,y)ₙ can be varied as desired to achieve coverage of protected region 100.

During operation, radar detection system 10 can detect the presence of an object within any of protected subregions 102, such as object 104. If sensor 12 detects the presence of object 104 within radii *rₙ* of any of points (x,y)ₙ, controller 14 can, for example, trigger an alarm. Controller 14 can be further configured to not trigger an alarm if an object is detected outside of any protected subregions 102, such as object 106.

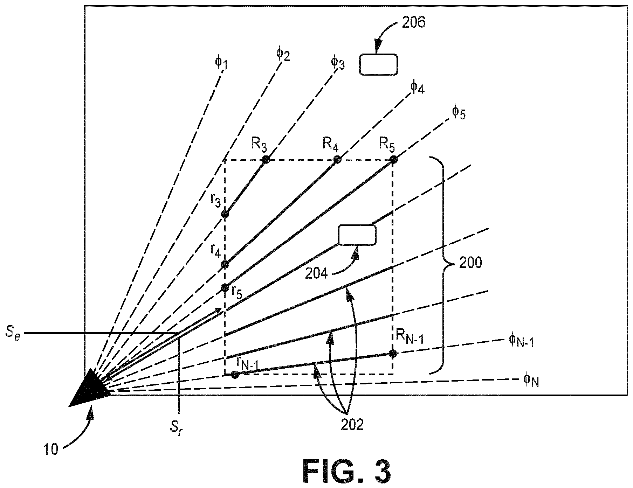

FIG. 3 is a plan view of exemplary radar detection system 10 which is calibrated to use angle vector [*φ₁... φ_{N}*] and corresponding vector of radius ranges [*r₁* ... *r_{N}*] and [*R*₁ ... *R_{N}*] to define protected region 200. As discussed above, *φₙ* denotes any of the angles in angle vector [*ϕ₁... φ_{N}*], *rₙ* denotes any of the radius ranges in [*r₁* ... *r_{N}*], and *Rₙ* denotes any of the radius ranges in [*R₁* ... *R_{N}*]. Each angle *φₙ* can have a corresponding location range, such as the radius range between *rₙ* and *Rₙ*, such that angle vector [*ϕ₁... φ_{N}*] has a corresponding vector of radius ranges [*r₁* ... *r_{N}*] and *[R₁* ... *R_{N}*]*.* Radius range *rₙ* defines a minimum radius and radius range *Rₙ* defines a maximum radius along each angle *φₙ*. Radius ranges *rₙ* and *Rₙ* along each angle *φₙ* can form a linear segment with a selected length equal to *Rₙ-rₙ.* Each linear segment extends along angle *φₙ* from radius *rₙ* to radius *Rₙ*. Each linear segment defined by radius ranges *rₙ* and *Rₙ* defines a protected subregion 202. The length of a protected subregion 202 can be zero if, for example, *Rₙ = rₙ,* indicating a corner of the protected region 200. For a given angle *φₙ*, points that are outside the corresponding linear segment defined by radius ranges *rₙ* and *Rₙ* are outside the protected region 200. Similarly, for a given angle *φₙ* for which neither *rₙ* nor *Rₙ* are defined, i.e., both *rₙ* and *Rₙ* are null, none of the region which the user desires to protect is within the signal path of sensor 12 along the angle *φₙ*.

Radar detection system 10 may be configured to allow a user to select location indicators which make up a vector of angles, such as angle vector [*φ₁... φ_{N}*]. Protected region 200 is defined by the set of protected subregions 202, such that protected region 200 is made up of a set of linear segments which each extend along an angle *φₙ* from *rₙ* to *Rₙ.* The radius ranges *rₙ* and *Rₙ* of each angle *φₙ* can be varied as desired to achieve coverage of protected region 200. Additional radius ranges (such as, for example, [*s₁* ... *s_{N}*] and [*S₁ ... S_{N}*]) can be selected to define more than one protected subregion 202 along an angle *φₙ*. While an outline of protected region 200 is illustrated in FIG. 3 for ease of viewing, it should be understood that only protected subregions 202 make up protected region 200.

During operation, radar detection system 10 can detect the presence of an object within any of protected subregions 202, such as object 204. If sensor 12 detects the presence of object 204 along any of angles *φₙ* between the defined radius ranges (i.e. between *Rₙ* and *rₙ*), controller 14 can, for example, trigger an alarm. Controller 14 can be further configured to not trigger an alarm if an object is detected outside of any protected subregions 202, such as object 206.

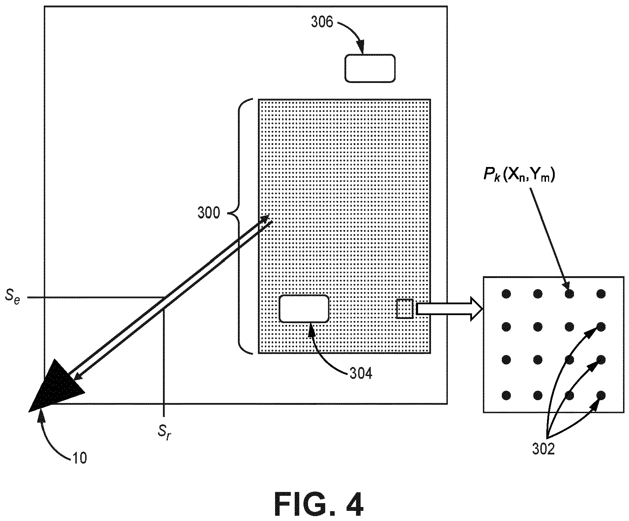

FIG. 4 is a perspective view of exemplary radar detection system 10 which is calibrated to use grid point vector [*P₁...P_{K}*] and corresponding grid vector [(X₁,Y₁)...(X_{N},Y_{M})] to define protected region 300. As discussed above, *Pₖ* denotes any of the points in grid point vector [*P₁...P_{K}*] and (Xₙ,Yₘ) denotes any of the coordinates in grid vector [(X₁,Y₁)...(X_{N},Y_{M})]. Each grid point *Pₖ* can have a corresponding location, given by coordinates (Xₙ,Yₘ). Each location as defined by coordinates (Xₙ,Yₘ) defines a protected subregion 302.

Radar detection system 10 may be configured to allow a user to select locations indicators which make up a vector of grid points which have x- and y-coordinates, such as grid point vector [*P₁...P_{K}*]*.* Protected region 300 is defined by the set of protected subregions 302, such that protected region 300 is made up of a set of x- and y-coordinates.

During operation, radar detection system 10 can detect the presence of an object within any of protected subregions 302, such as object 304. If sensor 12 detects the presence of object 304 at coordinates (Xₙ,Yₘ) of any of grid points *Pₖ*, controller 14 can, for example, trigger an alarm. Controller 14 can be further configured to not trigger an alarm if an object is detected outside of any protected subregions 302, such as object 306.

As described above with respect to FIG. 1, the components of radar detection system 10 can calculate and interpret positional data about each emitted radar signal *Sₑ* and reflected radar signal *Sᵣ.* Positional data can be calculated from the time of flight of the radar signal as it travels from the transmitter, reflects off of the target, and travels to the receiver. Radar detection system 10 can determine the coordinate at which an emitted radar signal *Sₑ* was reflected based on the angle and time at which the emitted radar signal *Sₑ* is emitted and the time at which the reflected radar signal *Sᵣ* is received. For calibrations such as the one depicted in FIG. 4, this positional data can be decomposed into x- and y-coordinates using well-known mathematical techniques to determine at which point *Pₖ* emitted radar signal *Sₑ* was reflected.

While FIGS. 2-4 illustrate protected subregions which are in close proximity to each other, resulting in an approximately contiguous protected region, it should be understood that a designated protected region can have any suitable shape and can be made up of discrete protected subregions which do not overlap. This can, for example, result in a protected region which partially or entirely surrounds an area which is not designated as protected, as well as various other configurations.

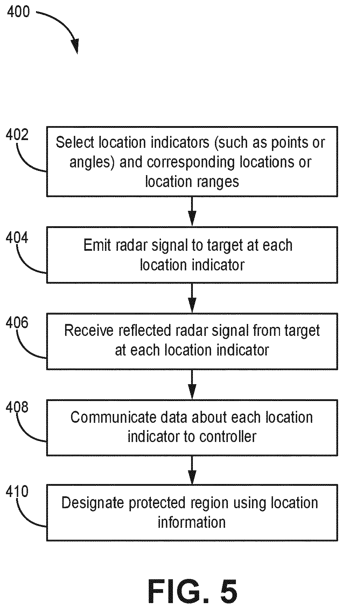

FIG. 5 illustrates exemplary method 400 of calibrating a radar detection system. Method 400 includes selecting location indicators and a corresponding location range for each location indicator (step 402), emitting a radar signal with a transmitter to the location range of each location indicator and reflecting the radar signal off of a target (step 404), receiving the reflected radar signal with a receiver (step 406), communicating the location of the target at each location indicator (step 408), and designating a protected region with the controller (step 410).

In step 402, a set of location indicators is selected. As described above with respect to FIGS. 2-4, this set of location indicators can be, for example, a vector of points or a vector of angles. An appropriate quantity of location indicators can be selected to provide coverage to the desired protected region. The selection of the set of location indicators can be achieved by a target moving through the area. The target may be a human, a robot, a drone, a vehicle, or some other moveable target. This selection can also be performed using a program stored in a memory unit of the radar detection system, and can be performed while the user is on location or remotely. A corresponding location range for each location indicator is also selected. As described above with respect to FIGS. 2-4, this set of location ranges can be, for example, a vector of radii, a vector of minimum and maximum radius ranges, or a grid of x- and y-coordinates. Each selected location range defines a protected subregion. The set of location ranges can be selected, for example, using a program stored in the memory unit. This selection can occur at any time during the calibration process after the location indicators are selected.

In step 404, a radar signal is emitted by a transmitter to each location indicator. In step 406, the radar signal is reflected off of a target and the reflected radar signal is detected by a receiver. Steps 404 and 406 will be discussed together. The target can be moved to each location indicator. The target can be, for example, a user performing calibration signals by moving and performing gestures that can be detected by the receiver. The calibration signals can be visible gestures or acoustic emissions. Visible gestures can be detected with the receiver using radar signals. The target can also be a user-directed device, such as a vehicle, drone, or other moveable target, which performs similar calibration signals. Visible gestures can include, for example, a stop in the target's movement for a selected period of time and/or a brief movement. A user can perform calibration signals in the form of visible gestures including a hand movement, a stop in movement such as a pause while walking, and/or a hand clap. A user can perform different visible gestures to designate different locations within the region. Acoustic emissions can include, for example, a noise emitted by the user, such as a hand clap or a voice command, and/or a noise emitted by a user-directed device. If acoustic emissions are used to signal that the target is at a desired location, the sensor 12 should include an acoustic detector (not shown) configured to detect the acoustic emissions. Any such acoustic emissions may be of any detectible wavelength suitable for the environment in which they are used. Any other calibration signals that are readily detectible by the receiver may also be used. During calibration, the receiver can detect the calibration location of each calibration signal which is performed, and the controller can record the calibration location associated with each location indicator and corresponding location range.

In step 408, positional data about the reflected radar signal for each location indicator is communicated between the sensor and a controller. Positional data can be calculated from the time of flight of the radar signal as it travels from the transmitter, reflects off of the target, and travels to the receiver.

In step 410, the controller designates a protected region based on input from the sensor and/or the user. Each location range of a location indicator defines a protected subregion. The protected region is defined by the sum of protected subregions. Once the controller has designated the protected region, the radar detection system has been calibrated and can detect the presence of objects within any of the protected subregions.

A radar detection system as described above provides numerous advantages. Calibrating a radar detection system using a set of selected location indicators, such as points or angles, and corresponding ranges allows the radar detection system to more accurately detect objects within the protected region. This increased accuracy results from the nature of the calibration process, which is more granular than conventional calibration methods. In addition, this calibration process more closely parallels the functioning of the radar detection system during use as compared to conventional methods, which also results in increased accuracy. Finally, the nature of the calibration process allows a user to easily calibrate the radar detection system by performing calibration signals or by selecting desired location indicators with a controller, and allows the user to easily tailor the protected subregions as desired to provide comprehensive and accurate security measures.

## Claims

1. A method (400) of calibrating a radar detection system (10), the method comprising:
selecting (402) a plurality of location indicators, wherein each of the plurality of location indicators has a location;
emitting (404), with a transmitter (16) of a sensor (12), a radar signal (*Sₑ*) to the location of each of the plurality of location indicators;
reflecting the radar signal off of a target at the location of each of the plurality of location indicators;
receiving (406), with a receiver (18) of the sensor (12), the radar signal (*Sᵣ*) which has been reflected off of the target at the location of each of the plurality of location indicators;
communicating (408), between the sensor (12) and a controller (14), the location of the target at each of the plurality of location indicators;
selecting, with the controller (14), at least one plurality of locations received from the sensor (12), wherein the at least one plurality of locations selected with the controller (14) defines a protected region (100, 200, 300); and
designating (410), with the controller (14), the protected region (100, 200, 300), thereby calibrating the radar detection system (10) such that the radar detection system (10) is capable of detecting an object (104, 204, 304) in the protected region (100, 200, 300);
wherein selecting (402) the plurality of location indicators comprises moving the target to each of the plurality of location indicators; and wherein selecting (402) the plurality of location indicators comprises performing at least one calibration signal associated with each of the plurality of location indicators,
**characterised in that**:
the target performs the calibrations signal;
the target is a user; and
the at least one calibration signal is selected from the group consisting of: a stop in movement, a movement, and an acoustic emission.

2. The method (400) of claim 1, wherein each of the plurality of location indicators has at least one location range and each location range defines a protected subregion (102, 202, 302) such that the protected region (100, 200, 300) is defined by the plurality of protected subregions (102, 202, 302).

3. The method (400) of claim 2, wherein the plurality of location indicators comprises a vector of points and the at least one location range of each of the vector of points is a plurality of radii about the point; and
wherein selecting, with the controller (14), at least one plurality of locations optionally comprises calculating, with the controller (14), a plurality of radii associated with each of the vector of points.

4. The method (400) of claim 2 or 3, wherein the plurality of location indicators comprises a vector of angles and the at least one location range of each of the vector of angles is a radius range; and
wherein the method optionally further comprises calculating, with the controller (14), a radius range associated with each of the vector of angles.

5. The method (400) of any of claims 2-4, wherein each of the plurality of location indicators has an x-coordinate and a y-coordinate, and wherein the x-coordinate and the y-coordinate of each of the plurality of location indicators defines each of the protected subregions (102, 202, 302).

6. The method (400) of any preceding claim, wherein the protected region (100, 200, 300) partially or entirely surrounds an area that is not designated as part of the protected region (100, 200, 300).

7. A radar detector for a security system (10), the radar detector comprising:
a sensor (12), wherein the sensor (12) comprises:
a transmitter (16), wherein the transmitter (16) is configured to emit a radar signal to a plurality of location indicators;
a receiver (18), wherein the receiver (18) is configured to receive a reflection of the radar signal from the transmitter (16) that is reflected off of a target; and
a converter (20); and
a controller (14), wherein the controller (14) is configured to communicate with the sensor (12) to record a location of each of the plurality of location indicators, and wherein the controller (14) is further configured to select at least one plurality of locations, designate a protected region (100, 200, 300) which is defined by the at least one plurality of locations and thereby calibrate the radar detector, and determine if an object (104, 204, 304) is present in the protected region (100, 200, 300);
wherein the controller (14) is configured to select the plurality of location indicators by detecting a target moving to each of the plurality of location indicators; **characterised in that** the target is a user that performs at least one calibration signal associated with each of the plurality of location indicators; wherein the at least one calibration signal is selected from the group consisting of: a stop in movement, a movement, and an acoustic emission.

8. The radar detector of claim 7, wherein the protected region (100, 200, 300) is defined by a plurality of protected subregions (102, 202, 302) and each of the plurality of protected subregions (102, 202, 302) is defined by each of the locations of the location indicators.

9. The radar detector of claim 7 or 8, wherein the controller (14) comprises a memory unit (22), at least one processor (24) and at least one communication device (26).

10. The radar detector of any of claims 7 to 9, wherein the controller (14) is further configured to:
trigger an alarm if an object (104, 204, 304) is detected in the protected region (100, 200, 300); and/or
record at least one plurality of location ranges associated with the calibration location of each of the at least one calibration signals, and wherein each of the protected subregions (102, 202, 302) is defined by each of the at least one plurality of location ranges.

11. The radar detector of any of claims 7 to 10, wherein the sensor (12) is further configured to detect at least one calibration signal, and the controller (14) is configured to communicate with the sensor (12) to record a calibration location for each of the at least one calibration signals.

12. The radar detector of any of claims 7 to 11, wherein the protected region (100, 200, 300) partially or entirely surrounds an area that is not designated as part of the protected region (100, 200, 300).

## Patentansprüche

1. Verfahren (400) zum Kalibrieren eines Radarerfassungssystems (10), wobei das Verfahren umfasst:
Auswählen (402) einer Vielzahl von Ortsindikatoren, wobei jeder der Vielzahl von Ortsindikatoren einen Ort aufweist;
Emittieren (404) eines Radarsignals (*Sₑ*) mit einem Sender (16) eines Sensors (12) zu dem Ort jedes der Vielzahl von Ortsindikatoren;
Reflektieren des Radarsignals von einem Ziel an dem Ort jedes der Vielzahl von Ortsindikatoren;
Empfangen (406) des Radarsignals (*S*ᵣ), das von dem Ziel an dem Ort jedes der Vielzahl von Ortsindikatoren reflektiert wurde, mit einem Empfänger (18) des Sensors (12);
Kommunizieren (408) des Orts des Ziels an jedem der Vielzahl von Ortsindikatoren zwischen dem Sensor (12) und einer Steuerung (14);
Auswählen mindestens einer Vielzahl von Orten, die von dem Sensor (12) empfangen werden, mit der Steuerung (14), wobei die mindestens eine Vielzahl von Orten, die mit der Steuerung (14) ausgewählt werden, eine geschützte Region (100, 200, 300) definiert; und
Bezeichnen (410) der geschützten Region (100, 200, 300) mit der Steuerung (14), wodurch das Radarerfassungssystem (10) derart kalibriert wird, dass das Radarerfassungssystem (10) in der Lage ist, ein Objekt (104, 204, 304) in der geschützten Region (100, 200, 300) zu erfassen;
wobei das Auswählen (402) der Vielzahl von Ortsindikatoren ein Bewegen des Ziels zu jedem der Vielzahl von Ortsindikatoren umfasst; und wobei das Auswählen (402) der Vielzahl von Ortsindikatoren ein Durchführen mindestens eines Kalibriersignals umfasst, das mit jedem der Vielzahl von Ortsindikatoren assoziiert ist, **dadurch gekennzeichnet, dass**:
das Ziel das Kalibriersignal ausführt;
das Ziel ein Benutzer ist; und
das mindestens eine Kalibriersignal ausgewählt ist aus der Gruppe bestehend aus: einem Bewegungsstopp, einer Bewegung und einer Schallemission.

2. Verfahren (400) nach Anspruch 1, wobei jeder der Vielzahl von Standortindikatoren mindestens einen Ortsbereich aufweist und jeder Ortsbereich eine geschützte Teilregion (102, 202, 302) derart definiert, dass die geschützte Region (100, 200, 300) durch die Vielzahl von geschützten Teilregionen (102, 202, 302) definiert ist.

3. Verfahren (400) nach Anspruch 2, wobei die Vielzahl von Ortsindikatoren einen Vektor von Punkten umfasst und der mindestens eine Ortsbereich jedes des Vektors von Punkten eine Vielzahl von Radien um den Punkt ist; und
wobei das Auswählen mindestens einer Vielzahl von Orten mit der Steuerung (14) optional ein Berechnen einer Vielzahl von Radien mit der Steuerung (14) umfasst, die mit jedem des Vektors von Punkten assoziiert sind.

4. Verfahren (400) nach Anspruch 2 oder 3, wobei die Vielzahl von Ortsindikatoren einen Vektor von Winkeln umfasst und der mindestens eine Ortsbereich jedes des Vektors von Winkeln ein Radiusbereich ist; und
wobei das Verfahren optional ferner ein Berechnen eines Radiusbereichs mit der Steuerung (14) umfasst, der mit jedem des Vektors von Winkeln assoziiert ist.

5. Verfahren (400) nach einem der Ansprüche 2-4, wobei jeder der Vielzahl von Ortsindikatoren eine x-Koordinate und eine y-Koordinate aufweist, und wobei die x-Koordinate und die y-Koordinate jedes der Vielzahl von Ortsindikatoren jede der geschützten Teilregionen (102, 202, 302) definiert.

6. Verfahren (400) nach einem der vorhergehenden Ansprüche, wobei die geschützte Region (100, 200, 300) einen Bereich, der nicht als Teil der geschützten Region (100, 200, 300) bezeichnet ist, teilweise oder vollständig umgibt.

7. Radardetektor für ein Sicherheitssystem (10), wobei der Radardetektor umfasst:
einen Sensor (12), wobei der Sensor (12) umfasst:
einen Sender (16), wobei der Sender (16) dazu konfiguriert ist, ein Radarsignal an eine Vielzahl von Ortsindikatoren zu emittieren;
einen Empfänger (18), wobei der Empfänger (18) dazu konfiguriert ist, eine Reflexion des Radarsignals von dem Sender (16) zu empfangen, die von einem Ziel reflektiert wird; und
einen Wandler (20); und
eine Steuerung (14), wobei die Steuerung (14) dazu konfiguriert ist, mit dem Sensor (12) zu kommunizieren, um einen Ort jedes der Vielzahl von Ortsindikatoren aufzuzeichnen, und wobei die Steuerung (14) ferner dazu konfiguriert ist, mindestens eine Vielzahl von Orten auszuwählen, eine geschützte Region (100, 200, 300) zu bezeichnen, die durch die mindestens eine Vielzahl von Orten definiert ist, und dadurch den Radardetektor zu kalibrieren, und zu bestimmen, ob ein Objekt (104, 204, 304) in der geschützten Region (100, 200, 300) vorliegt;
wobei die Steuerung (14) dazu konfiguriert ist, die Vielzahl von Ortsindikatoren auszuwählen, indem ein Ziel erfasst wird, das sich zu jedem der Vielzahl von Ortsindikatoren bewegt; **dadurch gekennzeichnet, dass** das Ziel ein Benutzer ist, der mindestens ein Kalibriersignal durchführt, das mit jedem der Vielzahl von Ortsindikatoren assoziiert ist; wobei das mindestens eine Kalibriersignal ausgewählt ist aus der Gruppe bestehend aus: einem Bewegungsstopp, einer Bewegung und einer Schallemission.

8. Radardetektor nach Anspruch 7, wobei die geschützte Region (100, 200, 300) durch eine Vielzahl von geschützten Teilregionen (102, 202, 302) definiert ist und jede der Vielzahl von geschützten Teilregionen (102, 202, 302) durch jeden der Orte der Ortsindikatoren definiert ist.

9. Radardetektor nach Anspruch 7 oder 8, wobei die Steuerung (14) eine Speichereinheit (22), mindestens einen Prozessor (24) und mindestens eine Kommunikationsvorrichtung (26) umfasst.

10. Radardetektor nach einem der Ansprüche 7 bis 9, wobei die Steuerung (14) ferner konfiguriert ist zum:
Auslösen eines Alarms, wenn ein Objekt (104, 204, 304) in der geschützten Region (100, 200, 300) erfasst wird; und/oder
Aufzeichnen mindestens einer Vielzahl von Ortsbereichen, die mit dem Kalibrierort jedes des mindestens einen Kalibriersignals assoziiert ist, und wobei jede der geschützten Teilregionen (102, 202, 302) durch jeden der mindestens einen Vielzahl von Ortsbereichen definiert ist.

11. Radardetektor nach einem der Ansprüche 7 bis 10, wobei der Sensor (12) ferner dazu konfiguriert ist, mindestens ein Kalibriersignal zu erfassen, und die Steuerung (14) dazu konfiguriert ist, mit dem Sensor (12) zu kommunizieren, um einen Kalibrierort für jedes des mindestens einen Kalibriersignals aufzuzeichnen.

12. Radardetektor nach einem der Ansprüche 7 bis 11, wobei die geschützte Region (100, 200, 300) einen Bereich, der nicht als Teil der geschützten Region (100, 200, 300) bezeichnet ist, teilweise oder vollständig umgibt.

## Revendications

1. Procédé (400) d'étalonnage d'un système de détection radar (10), le procédé comprenant :
la sélection (402) d'une pluralité d'indicateurs d'emplacement, dans lequel chacun de la pluralité d'indicateurs d'emplacement a un emplacement ;
l'émission (404), avec un émetteur (16) d'un capteur (12), d'un signal radar (*Sₑ*) vers l'emplacement de chacun de la pluralité d'indicateurs d'emplacement ;
la réflexion du signal radar sur une cible à l'emplacement de chacun de la pluralité d'indicateurs d'emplacement ;
la réception (406), avec un récepteur (18) du capteur (12), du signal radar (*Sᵣ*) qui a été réfléchi sur la cible à l'emplacement de chacun de la pluralité d'indicateurs d'emplacement ;
la communication (408), entre le capteur (12) et un dispositif de commande (14), de l'emplacement de la cible à chacun de la pluralité d'indicateurs d'emplacement ;
la sélection, avec le dispositif de commande (14), d'au moins une pluralité d'emplacements reçus du capteur (12), dans lequel l'au moins une pluralité d'emplacements sélectionnés avec le dispositif de commande (14) définit une région protégée (100, 200, 300) ; et
la désignation (410), avec le dispositif de commande (14), de la région protégée (100, 200, 300), étalonnant ainsi le système de détection radar (10) de sorte que le système de détection radar (10) est capable de détecter un objet (104, 204, 304) dans la région protégée (100, 200, 300) ;
dans lequel la sélection (402) de la pluralité d'indicateurs d'emplacement comprend le déplacement de la cible vers chacun de la pluralité d'indicateurs d'emplacement ; et dans lequel la sélection (402) de la pluralité d'indicateurs d'emplacement comprend l'exécution d'au moins un signal d'étalonnage associé à chacun de la pluralité d'indicateurs d'emplacement,
**caractérisé en ce que** :
la cible exécute le signal d'étalonnage ;
la cible est un utilisateur ; et
l'au moins un signal d'étalonnage est sélectionné dans le groupe constitué : d'un arrêt en mouvement, d'un mouvement et d'une émission acoustique.

2. Procédé (400) selon la revendication 1, dans lequel chacun de la pluralité d'indicateurs d'emplacement a au moins une plage d'emplacement et chaque plage d'emplacement définit une sous-région protégée (102, 202, 302) de sorte que la région protégée (100, 200, 300) est définie par la pluralité de sous-régions protégées (102, 202, 302).

3. Procédé (400) selon la revendication 2, dans lequel la pluralité d'indicateurs d'emplacement comprend un vecteur de points et l'au moins une plage d'emplacement de chacun du vecteur de points est une pluralité de rayons autour du point ; et
dans lequel la sélection, avec le dispositif de commande (14), d'au moins une pluralité d'emplacements comprend éventuellement le calcul, avec le dispositif de commande (14), d'une pluralité de rayons associés à chacun du vecteur de points.

4. Procédé (400) selon la revendication 2 ou 3, dans lequel la pluralité d'indicateurs d'emplacement comprend un vecteur d'angles et l'au moins une plage d'emplacement de chacun du vecteur d'angles est une plage de rayons ; et
dans lequel le procédé comprend également éventuellement le calcul, avec le dispositif de commande (14), d'une plage de rayons associée à chacun du vecteur d'angles.

5. Procédé (400) selon l'une quelconque des revendications 2 à 4, dans lequel chacun de la pluralité d'indicateurs d'emplacement a une coordonnée x et une coordonnée y, et dans lequel la coordonnée x et la coordonnée y de chacun de la pluralité d'indicateurs d'emplacement définit chacune des sous-régions protégées (102, 202, 302).

6. Procédé (400) selon une quelconque revendication précédente, dans lequel la région protégée (100, 200, 300) entoure partiellement ou entièrement une zone qui n'est pas désignée comme faisant partie de la région protégée (100, 200, 300).

7. Détecteur de radar pour un système de sécurité (10), le détecteur de radar comprenant :
un capteur (12), dans lequel le capteur (12) comprend :
un émetteur (16), dans lequel l'émetteur (16) est configuré pour émettre un signal radar vers une pluralité d'indicateurs d'emplacement ;
un récepteur (18), dans lequel le récepteur (18) est configuré pour recevoir une réflexion du signal radar de l'émetteur (16) qui est réfléchi sur une cible ; et
un convertisseur (20) ; et
un dispositif de commande (14), dans lequel le dispositif de commande (14) est configuré pour communiquer avec le capteur (12) pour enregistrer un emplacement de chacun de la pluralité d'indicateurs d'emplacement, et dans lequel le dispositif de commande (14) est en outre configuré pour sélectionner au moins une pluralité d'emplacements, désigner une région protégée (100, 200, 300) qui est définie par l'au moins une pluralité d'emplacements et ainsi étalonner le détecteur de radar, et déterminer si un objet (104, 204, 304) est présent dans la région protégée (100, 200, 300) ;
dans lequel le dispositif de commande (14) est configuré pour sélectionner la pluralité d'indicateurs d'emplacement en détectant une cible se déplaçant vers chacun de la pluralité d'indicateurs d'emplacement ; **caractérisé en ce que** la cible est un utilisateur qui exécute au moins un signal d'étalonnage associé à chacun de la pluralité d'indicateurs d'emplacement ;
dans lequel l'au moins un signal d'étalonnage est sélectionné dans le groupe constitué : d'un arrêt de mouvement, d'un mouvement et d'une émission acoustique.

8. Détecteur de radar selon la revendication 7, dans lequel la région protégée (100, 200, 300) est définie par une pluralité de sous-régions protégées (102, 202, 302) et chacune de la pluralité de sous-régions protégées (102, 202, 302) est définie par chacun des emplacements des indicateurs d'emplacement.

9. Détecteur de radar selon la revendication 7 ou 8, dans lequel le dispositif de commande (14) comprend une unité de mémoire (22), au moins un processeur (24) et au moins un dispositif de communication (26).

10. Détecteur de radar selon l'une quelconque des revendications 7 à 9, dans lequel le dispositif de commande (14) est en outre configuré pour :
déclencher une alarme si un objet (104, 204, 304) est détecté dans la région protégée (100, 200, 300) ; et/ou
enregistrer au moins une pluralité de plages d'emplacement associées à l'emplacement d'étalonnage de chacun des au moins un signaux d'étalonnage, et dans lequel chacune des sous-régions protégées (102, 202, 302) est définie par chacune de l'au moins une pluralité de plages d'emplacement.

11. Détecteur de radar selon l'une quelconque des revendications 7 à 10, dans lequel le capteur (12) est en outre configuré pour détecter au moins un signal d'étalonnage, et le dispositif de commande (14) est configuré pour communiquer avec le capteur (12) pour enregistrer un emplacement d'étalonnage pour chacun des au moins un signaux d'étalonnage.

12. Détecteur de radar selon l'une quelconque des revendications 7 à 11, dans lequel la région protégée (100, 200, 300) entoure partiellement ou entièrement une zone qui n'est pas désignée comme faisant partie de la région protégée (100, 200, 300).
